(19) Europäisches Patentamt
European Patent Office
Office européen des brevets

(11) Publication number: **0 460 628 B1**

# (12) EUROPEAN PATENT SPECIFICATION

(45) Date of publication of patent specification: **12.04.95**

(51) Int. Cl.[6]: **F16D 13/75**

(21) Application number: **91109171.8**

(22) Date of filing: **05.06.91**

## (54) Method for correcting data used for clutch control operation.

(30) Priority: **06.06.90 JP 148115/90**

(43) Date of publication of application:
**11.12.91 Bulletin 91/50**

(45) Publication of the grant of the patent:
**12.04.95 Bulletin 95/15**

(84) Designated Contracting States:
**DE FR GB IT SE**

(56) References cited:
**EP-A- 0 160 368**
**EP-A- 0 193 412**

**PATENT ABSTRACTS OF JAPAN vol. 013, no. 340 (M-857) 31 July 1989,& JP-A-01 115741 (DAIHATSU MOTOR) 09 May 1989**

**PATENT ABSTRACTS OF JAPAN vol. 011, no. 289 (M-625) 18 September 1987,& JP-A-62 083541 (TOYOTA MOTOR) 17 April 1987**

(73) Proprietor: **ZEXEL CORPORATION**
**6-7, Shibuya 3-chome,**
**Shibuya-ku**
**Tokyo 150 (JP)**

(72) Inventor: **Kohno, Hiromi Zexel**
**Corp.Higashimatsuyama Plant**
**13-26, Yakyu-cho, 3-chome**
**Higashimatsuyama-shi**
**Saitama 355 (JP)**

(74) Representative: **Schwabe - Sandmair - Marx**
**Stuntzstrasse 16**
**D-81677 München (DE)**

**EP 0 460 628 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

#### Field of the Invention

The present invention relates to a method for correcting clutch data including position data representing an operation condition of a clutch connected with an internal combustion engine, wherein said method comprising the steps of

sensing the temperature of the clutch for obtaining corresponding temperature data,

discriminating whether or not the sensed temperature is higher than a predetermined value,

repeatedly carrying out learing operations for deriving reference data to be used for correcting the clutch data, and

correcting the clutch data on the basis of the reference data only, if the sensed temperature is higher than said predetermined temperature value.

#### Description of the Prior Art

The before-mentioned method for correcting clutch data is known from JP-A-01115741. However, with this known method the hydraulic pressure to be supplied to a hydraulic type automatic starting clutch is controlled in accordance with a control signal applied to an actuator. With this known method the rotational engine speed, a gear shift range of a transmission and the temperature of the oil supplied to the starting clutch are sensed and moreover also an idling condition before a vehicle drive-off is sensed on the basis of various driving signals. Also with this known method a learning operation is realized for obtaining a reference control signal for controlling the actuator in such a way that a dropping of the engine speed happening at the time the transmission is shifted from its non-driving range to its driving range is nearly equal to a target engine speed. When the sensed oil temperature is higher than a predetermined value and the engine is in its idling operation before the vehicle drive-off, a correction value setting an memory means is activated for setting and storing correction values of the control signal corresponding to various oil temperatures. Moreover a control signal is calculated on the basis of a learned reference control signal and on the basis of a correction value which control signal corresponds to each oil temperature when the sensed oil temperature is lower than the predetermined value and the engine is in its idling operation condition before the vehicle drive-off.

From EP-A-0 193 412 a clutch control system is known which includes an electronic control apparatus for controlling a clutch based on clutch control data stored through a test process. The clutch control system comprises means for measuring the temperature of lubricating oil in a gear transmission and the control apparatus stores a corrective clutch control value dependent upon the temperature of the lubricating oil and uses that value to correct a value ascertained in the test for controlling the clutch. Since this known clutch control system has means for correcting the learned value with a variation in the temperature of the lubricating oil in the gear transmission at the time of learning the position of start connecting the clutch, the position to start connecting the clutch can automatically be controlled more appropriately.

In further prior art constructions there has been widely used a clutch control system for controlling the operation of a friction type clutch in which the clutch is coupled with an actuator and the amount of operation of the clutch is controlled by the actuator in accordance with an electric control signal generated by a control unit.

The clutch control system of this type is employed in, for example, a vehicle automatic transmission system. In the case where the operation of the clutch is controlled by the use of the clutch control system of this type, precise clutch data corresponding to the relationship between the position of a member for operating the clutch and the amount of operation of the clutch is required to ensure appropriate clutch control operation. However variation in this relationship arises because of variation of manufacture, and also with the passage of time due to the wear of the clutch disc and the like.

Accordingly, if precise control of the clutch is required, it is necessary to carry out appropriate correction of the clutch data representing the relationship by, for example, a learning operation. In the prior art, for correcting such clutch data, the meet position of the clutch pressure plate, at which the rotation of the input shaft of the transmission starts by the beginning of the transmission of torque through the clutch owing to the meeting between the pressure plate and the associated clutch disk, is determined by a learning operation which is, for example, conducted each time the selector is set to its neutral (N) position, and the clutch data necessary for controlling the clutch is corrected by the use of the resulting learned data to obtain the corrected or up-dated clutch data.

However, since the learned meet position data greatly depends upon the temperature of the clutch disk, the following disadvantage may arise in the conventional method. Namely, in the case of a vehicles system, for example, the lerned meet position data which is obtained by the first learning operation carried out after the vehicle has been parked for long time as quite different from that obtained after repeated vehicle drive-offs. If the latter data is used for the correction of the clutch data, the rotation of the input shaft may begin when the clutch pedal is released only slightly. Accordingly, there is a disadvantage in that large slip of the clutch may occur at vehicle drive-off if the clutch data is corrected by the use of the latter learned data.

## SUMMARY OF THE INVENTION

It is an object of the present invention to provide an improved method for correcting data used for controlling clutch operation which is capable of overcoming the foregoing drawbacks.

It is another object of the present invention to provide a method for correcting data used for controlling the clutch operation by the use of more exact data showing the meet position of the clutch.

It is still another object of the present invention to provide a method for correcting data used for a clutch control operation by taking the temperature of the clutch into account.

According to the present invention the said object is solved in that

said clutch is a friction type clutch,

said position data are derived as meet position data representing an operation condition of the friction type clutch corresponding to a change from its disconnected state to its semi-engaged state,

with said discriminating step it is discriminated whether or not the temperature data is lying within a prescribed range, and said temperature data is derived by calculation from predetermined data indicating a rate of clutch temperature increase during semi-engaged operation of the clutch and a rate of clutch temperature decrease during operation of the clutch in other than the semi-engaged operation,

said meet position data is updated by said repeated predetermined learning operations only when the temperature data is in the said prescribed range, and

the clutch data is corrected by the use of an updated meet position data obtained in said updating step.

Thus, the meet position data, which is obtained by the learning operation only when the temperature of the clutch is lying within a prescribed range is used for correcting the clutch data used for clutch control operation and learned meet position data affected by clutch temperature increase is prevented from being used for the correction of the clutch data used for clutch control operation.

According to another aspect of the present invention the temperature of the clutch is detected or estimated by calculation and the meet position data obtained by a prescribed learning operation is corrected on the basis of the detected or calculated temperature. Thus the clutch data used for clutch control operation is corrected by the meet position data correcting in accordance with the temperature of the clutch. As a result the clutch data is properly corrected regardless of changes in the temperature of the clutch.

The invention will be better understood and other objects and advantages thereof will be more apparent from the following detailed description of preferred embodiments with reference to the accompanying drawings.

## BRIEF EXPLANATION OF THE DRAWINGS

Fig. 1 is a schematic view illustrating an embodiment of a vehicle control system including a clutch control system in which clutch data concerning a friction type clutch is corrected in accordance with the present invention;

Fig. 2 is a graph showing the relationship between the position of the pressure plate of the clutch shown in Fig. 1 and the torque transmitted through the clutch;

Fig. 3 is a flowchart of a correction processing program executed in the apparatus shown in Fig. 1;

Fig. 4 is a flowchart of another correction processing program executed in the apparatus shown in Fig. 1;

Fig. 5 is a characteristic curve showing the relationship between the temperature of the clutch and the coefficient used for calculating the meet position data;

Fig. 6 is a flowchart showing temperature estimation program;

Figs. 7A and 7B are graphs for explaining the calculation for estimating the temperature according to the temperature estimation program shown in Fig. 6;

Fig. 8 is a flowchart showing another temperature estimation program; and

Fig. 9 is a graph showing characteristic curves for obtaining the correction value used in the program shown in Fig. 8.

## DESCRIPTION OF THE PREFERRED EMBODIMENT

Fig. 1 schematically shows an embodiment of a vehicle control system including a clutch controlling system in which clutch data concerning a friction type clutch is corrected according to the method of the present invention. Reference numeral 1 generally designates a vehicle control system for a vehicle (not shown) powered by an internal combustion engine 2, and a friction clutch 3 is mounted on an engine flywheel 2a. The friction clutch 3 is a well-known dry-type single-disc clutch having a clutch release lever 3a, a pressure plate 3b and a clutch disc 3c, and is controlled by a clutch control system 4 including a clutch control unit 5. The clutch 3 is connected by a connecting rod 6 with a gear transmission 7, which is associated with an automatic gear-shifting control unit 8 to form a conventional automatic gear-shifting control system.

In order to control the engaging/disengaging (ON/OFF) operation of the clutch 3 in response to an electric signal, the clutch control system 4 has a clutch actuator 9 having a piston rod 9a connected with the clutch release lever 3a, and the clutch actuator 9 is responsive to a control signal C generated by the clutch control unit 5 to control the position of the pressure plate 3b, whereby the amount of operation of the clutch 3 can be controlled.

For detecting how the clutch 3 is being operated at each moment, in other words, for detecting the operation condition of the clutch 3, a stroke sensor 10 is coupled with the clutch actuator 9 to detect the operation position of the release lever 3a of the clutch 3 and a position signal PS indicating the operation position of the release lever 3a is produced by the stroke sensor 10. Since the position of the pressure plate 3b, on which the operation condition of the clutch 3 depends, has a predetermined relation with the operation position of the release lever 3a, it follows that the position signal PS from the stroke sensor 10 indicates the position P of the pressure plate 3b.

The position signal PS is supplied to the clutch control unit 5 which includes a central processing unit (CPU) 11, read-only memory (ROM) 12, random access memory (RAM) 13 and I/O interface 14, which are interconnected by a bus 15 to form a conventional microcomputer system.

Associated with the internal combustion engine 2 is a speed sensor 16, which is a sensor of well-known design for detecting the input rotational speed N of the clutch 3 and producing a first speed signal Se indicating this speed. A vehicle speed sensor 17, which is a conventional sensor for detecting the running speed of the vehicle, produces a second speed signal So showing the vehicle running speed. The first and second speed signals Se and So are supplied to the clutch control unit 5 to which an acceleration signal AC indicating the amount of operation of an accelerator pedal 19 is further applied from an acceleration sensor 18, for detecting the amount of operation of the accelerator pedal 19.

Data corresponding to the designed-in relationship between the position P of the pressure plate 3b indicated by the position signal PS and the operation condition of the clutch 3 is stored in the ROM 12 as initial clutch data. The initial clutch data includes first data showing an OFF position $P_1$ of the clutch 3 at which the pressure plate 3b is maximally apart from the clutch disc 3c and the clutch 3 is in its fully disengaged state, second data showing a meet position $P_2$ ($> P_1$) of the clutch 3 which is a position of the pressure plate 3b at which the input shaft of the transmission 7 begins to rotate owing to the fact that the operation of the clutch 3 changes from its disconnected state to its semi-engaged state to cause torque transmitting operation, third data showing a finish position $P_3$ ($> P_2$) of the clutch 3 which is a boundary position between the semi-engaged state and the engaged state of the clutch 3, and fourth data showing an ON position $P_4$ ($> P_3$) at which the pressure plate 3b maximally pushes the clutch disc 3c to obtain the fully engaged state of the clutch 3.

Fig. 2 shows the relationship based on the initial clutch data between the position P of the pressure plate 3b of the clutch 3 and the torque transmitted therethrough.

The initial clutch data stored in the ROM 12 is transferred to the RAM 13 in response to the supply of power to the clutch control unit 5, and the initial clutch data is stored in the RAM 13 as clutch data used for controlling the clutch 3. The clutch control unit 5 is responsive to a command signal CM produced from the automatic gear-shifting control unit 8, and produces the control signal C for controlling the clutch 3 with reference to the clutch data stored in the RAM 13 and the position signal PS so as to obtain the desired operation condition of the clutch 3 in accordance with the command signal CM. In this embodiment, the command signal CM is for commanding the start time of the operation for engaging/disengaging the clutch 3 in order to carry out the automatic gear-shifting operation of the transmission 7.

Since the relationship between the position P of the pressure plate 3a indicated by the position signal PS and the operation condition of the clutch 3 (the torque transmitted through the clutch 3) varies due to, for example, wear of various portions of the clutch 3 with the passage of time, for assuring precise control of the clutch 3, it is necessary to correct the clutch data at appropriate time intervals. For this purpose, the clutch control system 4 shown in Fig. 1 has a neutral position detector 20 coupled with a gear selector 21 having a selecting lever 21a, and a learning timing signal TS is generated from the neutral position detector 20 each time the selecting lever 21a is positioned at its neutral (N) position. The learning timing signal TS is applied to the clutch control unit 5 and a predetermined learning operation for detecting the actual meet position is carried out for predetermined conditions by the clutch control unit 5 to produce learned data showing the resulting learned meet position. The clutch data stored in the RAM 13 is corrected by the use of the learned data.

The learning and correcting operations described above are carried out by the clutch control unit 5 in accordance with a correction program stored in the ROM 12 in advance, which is executed in the microcomputer system of the clutch control unit 5. This correction program is shown in Fig. 3 in the form of a flowchart, and the operation for correcting the clutch data will be now described with reference to the flowchart shown in Fig. 3.

The correction program 30 shown in Fig. 3 is adapted to be executed each time the learning timing signal TS is applied to the clutch control unit 5. After the start of the execution of the correction program 30, the operation moves to step 31 in which discrimination is made as to whether or not the temperature T of the clutch disk 3c of the clutch 3 is higher than a prescribed value K. The temperature of the clutch 3 can be directly detected by means of, for example, a temperature detector 22 using a thermistor in a conventional way, and an electric signal representing the resulting detected temperature is supplied to the clutch control unit 5. The electric signal may be used for the discrimination operation. However, in this embodiment, a calculation for estimating the temperature of the clutch 3 at each instant is carried out in accordance with a temperature estimation program 40 shown in Fig. 6. The determination in step 31 is made on the basis of the resulting estimated temperature data T obtained by the execution of the temperature estimation program 40.

Referring to Fig. 6, the temperature estimation program 40 is adapted to be executed at prescribed time intervals. After the start of the execution of the temperature estimation program 40, the operation moves to step 41 in which discrimination is made, based upon the position P of the pressure plate 3b shown by the position signal PS, as to whether or not the clutch 3 is operating in a semi-engaged state, that is, as to whether or not the position P of the pressure plate 3b is between the positions $P_2$ and $P_3$. The determination in step 41 is YES when the position P of the pressure plate 3b is between $P_1$ and $P_2$, and the operation moves to step 42 in which discrimination is made as to whether or not temperature data T has reached the predetermined maximum value Max. The temperature data T is set at a minimum value Min in an initialization step (not shown). The execution of the temperature estimation program 40 at this time is terminated when the temperature data T has reached Max. When it is found in step 42 that the temperature data T has not reached Max, the operation moves to step 43, in which a value DA is added to the temperature data T and the resulting value is set as up-dated temperature data T. Then, the execution of the program 40 is terminated.

On the other hand, when the position P of the pressure plate 3b is not between $P_2$ and $P_3$, the determination in step 41 is NO and the operation moves to step 44 in which discrimination is made as to whether or not the temperature data T is equal to a predetermined minimum value Min. The execution of the program 40 is terminated at this time when the temperature data T is equal to Min. When the temperature data T is not equal to Min in step 44, the operation moves to step 45, in which a value DB is subtracted from the temperature data T and the resulting value is set as up-dated temperature data T. Then, the execution of the program 40 is terminated.

The operation of the temperature estimation program 40 shown in Fig. 6 will be now described with reference to Figs. 7A and 7B.

Fig. 7A is a graph showing one example of change in the position P of the pressure plate 3b with the passage of time. Although the determination in step 41 is NO at time $t_1$, where the engagement operation of the clutch 3 starts, the temperature data T does not change because it is equal to Min. When the operation of the clutch 3 enters the semi-engaged condition after $t_2$, the determination in step 41 is YES, so that the temperature data T is stepwisely increased by DA each program cycle. Accordingly, as illustrated in Fig. 7B, the temperature data T increases at a predetermined rate with the passage of time after $t_2$.

The determination in step 41 becomes NO when the clutch 3 leaves the semi-engaged operation zone at $t_3$, so that the temperature data T decreases stepwisely by DB each program cycle. In this embodiment, since DA is greater than DB, the decreasing rate of the temperature data T is smaller than the increasing rate thereof. When the operation of the clutch 3 enters the semi-engaged operation condition after $t_4$, the temperature data T increases for the same reason as described above. However, since the temperature data T cannot exceed Max, the increase in the temperature T halts even if the clutch 3 is operated in the semi-engaged condition after the temperature data T has reached Max. The decrease in the temperature data T starts after the position P of the pressure plate 3b leaves the semi-engaged range at $t_6$.

As will be understood from the foregoing description, DA represents an increment in the temperature data T per unit time during the semi-engaged operation of the clutch 3, while DB represents a decrement in the temperature data T per unit time in the operation condition of the clutch 3 other than the semi-engaged operation condition. Thus, the increase in the temperature of the clutch 3 during the semi-engaged operation and the decrease in the temperature thereof in cases other than the semi-engaged operation are simulated by the values DA and DB, and the temperature of the clutch 3 is estimated by calculation.

Returning to Fig. 3, when the temperature data T is smaller than K, wherein K is a value between Min and Max, the operation moves to step 32 in which the learning operation for obtaining the actual meet position is carried out by producing the control signal C so as to cause the clutch 3 to operate and then detecting the actual meet position of the clutch 3. Thus, the actual meet position is determined in a conventional manner on the basis of the first speed signal Se and the position signal PS, which are supplied to to the clutch control unit 5 at that time. As a result, the learned data $D_n$ representing the current meet position is obtained. That is, the learned data $D_n$ shows the actual value of the position $P_2$ at this time.

In step 33, calculation for obtaining meet position data D used for the correction of the clutch data is carried out in accordance with the following formula:

$$D = X \bullet D_{n-1} + (1-X) \bullet D_n$$

wherein, $D_n$ is the value of the learned meet position data obtained by the processing operation in step 32 in the last program cycle, $D_{n-1}$ is the value of the learned data obtained by the processing operation in step 32 in the preceding program cycle, and X is a coefficient, which is determined appropriately in the range between 0 and 1.

The meet position data D obtained in step 33 is stored in the RAM 13 as up-dated learned meet position data representing the position $P_2$, and the clutch data stored in the RAM 13 by the transfer operation is corrected on the basis of the meet position data D in step 34.

Steps 32 to 34 are not executed when it is determined in step 31 that the temperature data T is greater than K, and it follows that the correction of the clutch data is not carried out.

According to the arrangement constitution described in the foregoing, the learned data is obtained only when the temperature data T is not greater than K, and the correction of the clutch data is performed by the use of the up-dated meet position data D obtained on the basis of the learned data. As a result, it follows that neither the learning operation for obtaining the actual value of the position $P_2$ nor the correction operation of the clutch data is not carried out in the case where a part of the characteristic curve of the clutch 3 changes as shown by the dotted line in Fig. 2 because of an increase in the temperature of the clutch 3. Therefore, as shown in Fig. 2, even if the position $P_2$ shifts to the position Pa as a result of clutch temperature increase, the clutch characteristic curve (a) in Fig. 2 is prevented from being corrected to the characteristic curve (b) in Fig. 2 as a result the shift of the position $P_2$, regardless of the change in a part of the clutch characteristic curve.

As a result, since correction is limited only to that for compensating for wear of the clutch disk 3a, there is no possibility of the correction of the clutch data based on the learned data causing slip of the clutch 3 at vehicle drive-off.

Fig. 4 is a flowchart showing another correction program 50 for correcting the clutch data by the use of the learned data representing the current meet position according to the present invention.

The correction processing program 50 is executed each time the learning timing signal TS is applied to the clutch control unit 5. After the start of the execution of the program 50, the operation moves to step 51 in which the learning operation is carried out in a similar manner as that executed in step 32 of the correction program 30 shown in Fig. 3. After this, the operation moves to step 52 in which a coefficient X is calculated on the basis of data indicating the temperature of the clutch 3, which is may be data estimated by the execution of the temperature estimation program 40 or data based on the actual temperature of the clutch 3 detected by the temperature detector 22.

In step 52 a map calculation for determining the value of the coefficient X is carried out using map data corresponding to the relationship between the temperature of the clutch 3 and the coefficient X shown in Fig. 5. After this, the meet position data D representing the meet position of the clutch 3, which is used for the correction of the clutch data, is calculated in step 53 in a similar manner to that in step 33 of the program shown in Fig. 3. The operation then moves to step 54 in which the data processing operation for correcting the clutch data by the use of the meet position data D is carried out in a similar manner to that in step 34 of the program 30 of Fig. 3.

As will be understood from the foregoing description, the data processing operation according to the correction program 50 is different from that of the program 30 in that the meet position data D is calculated by the use of the coefficient X depending upon the temperature of the clutch and the clutch data is corrected in accordance with the meet position data D obtained in step 53 even if the temperature of the clutch 3 is high.

The estimation of the temperature of the clutch 3 can be accomplished in a manner other than that according to the program 40 of Fig. 6.

Fig. 8 is a flowchart showing another temperature estimation program 60 for estimating the temperature of the clutch, which will be now explained.

After the start of the execution of the program 60, the operation moves to step 61 in which discrimination is made as to whether or not the clutch 3 is in the semi-engaged state in a similar manner to that in step 41 of the temperature estimation program 40 of Fig. 6. When the position P is between $P_2$ and $P_3$, the operation moves to step 62 in which a value H is calculated.

As illustrated in Fig. 9, the value of H is a function of the position P and the input rotational speed N, and a map calculation for determining the value of H is carried out in step 62 in accordance with map data corresponding to the characteristic curves shown in Fig. 9.

Then, the operation moves to step 63 in which discrimination is made as to whether or not temperature data T has reached the predetermined maximum value Max. The temperature data T is set at a the minimum value Min in an initialization step (not shown). If the temperature data T has reached Max, the execution of the temperature estimation program 60 is terminated at this time. In contrast, when it is found in step 63 that temperature data T has not reached Max, the operation moves to step 64, in which a value H is added to the temperature data T and the resulting value is set as up-dated temperature data T. Then, the execution of the program 60 is terminated.

On the other hand, when the position P of the pressure plate 3b is not between $P_2$ and $P_3$, the determination in step 61 is NO and the operation moves to step 65 in which discrimination is made as to whether or not the temperature data T is equal to a predetermined minimum value Min. The execution of the program 60 is terminated at this time if the temperature data T is equal to Min; When the temperature data T is found not to equal Min in step 65, the operation moves to step 66, in which a value DB is subtracted from the temperature data T and the resulting value is set as updated temperature data T. Then, the execution of the program 60 is terminated.

As will be understood from the foregoing description, according to the temperature estimation program 60 shown in Fig. 8, since the temperature increase of the clutch 3 per unit time during its semi-engaged state is determined in accordance with characteristic curves depending upon the position P and the rotational speed N, more exact estimation of the temperature of the clutch 3 can be realized than in the case where the program 40 is used.

## Claims

1. A method for correcting clutch data including position data representing an operation condition of a clutch (3) connected with an internal combustion engine, said method comprising the steps of:

   sensing the temperature of the clutch (3) for obtaining corresponding temperature data,

   discriminating whether or not the sensed temperature is higher than a predetermined value,

   repeatedly carrying out learing operations for deriving reference data to be used for correcting the clutch data, and

   correcting the clutch data on the basis of the reference data only, if the sensed temperature is higher than said predetermined temperature value,

   **characterized** in that

   said clutch (3) is a friction type clutch,

   said position data are derived as meet position data representing an operation condition of the friction type clutch (3) corresponding to a change from its disconnected state to its semi-engaged state,

   with said discriminating step it is discriminated whether or not the temperature data is lying within a prescribed range, and said temperature data is derived by calculation from predetermined data indicating a rate of clutch temperature increase during semi-engaged operation of the clutch and a rate of clutch temperature decrease during operation of the clutch in other than the semi-engaged operation,

   said meet position data is updated by said repeated predetermined learning operations only when the temperature data is in the said prescribed range, and

   the clutch data is corrected by the use of an updated meet position data obtained in said updating step.

2. A method as claimed in claim 1, wherein said sensing step has a first step for discriminating whether or not the clutch is operating in the semi-engaged state, a second step responsive to a result of the discrimination in said first step for incrementing the temperature data by prescribed amount at prescribed time intervals when the clutch is operating in its semi-engaged operation condition, and a third step responsive to the result of the discrimination in said first step for decrementing the temperature data by prescribed amount at prescribed time intervals when the clutch is not operating in its semi-engaged operation condition.

3. A method as claimed in claim 2, wherein the amount by which the temperature data is incremented per unit time is set to be greater than the amount by which the temperature data is decremented per unit time.

**4.** A method as claimed in claim 2, wherein said second step is executed only when the temperature data is smaller than a predetermined maximum value.

**5.** A method as claimed in claim 2, wherein said third step is executed only when the temperature data is greater than a predetermined minium value.

**6.** A method as claimed in claim 2, wherein the prescribed amount in said first step is determined depending upon an amount of operation of the clutch and an input rotational speed of the clutch.

**7.** A method as claimed in claim 1, wherein with said calculation step a coefficient value is calculated on the basis of data indicating an estimated temperature of the friction type clutch (3) and

new meet position data are determined on the basis of a current updated meet position data obtained by said updating step and the said coefficient value calculated in said calculating step.

**8.** A method as claimed in claim 1, wherein the temperature data is obtained by directly detecting the temperature of the friction type clutch (3) by means of a temperature detecting means associated with the friction type clutch (3).

## Patentansprüche

**1.** Verfahren zum Korrigieren von Kupplungsdaten, die Positionsdaten enthalten, welche einen Betriebszustand einer Kupplung (3) wiedergeben, die mit einer Brennkraftmaschine verbunden ist, wobei das Verfahren die folgenden Schritte umfaßt:

Abtasten der Temperatur der Kupplung (3), um entsprechende Temperaturdaten zu erhalten,

Unterscheiden bzw. Diskriminieren, ob die abgetastete Temperatur höher ist als ein vorbestimmter Wert oder nicht,

wiederholtes Durchführen von Lernoperationen, um Bezugsdaten abzuleiten, die für die Korrektur der Kupplungsdaten zu verwenden sind, und

Korrigieren der Kupplungsdaten auf der Grundlage der Bezugsdaten nur dann, wenn die abgetastete Temperatur höher ist als der vorbestimmte Temperaturwert,

dadurch **gekennzeichnet**, daß

die Kupplung (3) eine Reibungstypkupplung ist,

die Positionsdaten als Berührungspositionsdaten abgeleitet werden, die einen Betriebszustand der Reibungskupplung (3) wiedergeben, der einer Änderung aus dem abgetrennten Zustand in den halb eingekuppelten Zustand entspricht,

wobei bei dem Unterscheidungs- bzw. Diskriminierungsschritt unterschieden wird, ob die Temperaturdaten innerhalb eines vorgeschriebenen Bereiches liegen oder nicht und wobei die Temperaturdaten durch Berechnung aus vorherbestimmten Daten abgeleitet werden, die eine Rate der Kupplungstemperaturzunahme während des halb eingekuppelten Betriebes der Kupplung und eine Rate der Kupplungstemperaturabnahme während des Betriebes der Kupplung in einem anderen als dem halb eingekuppelten Betrieb angeben,

wobei ferner die Berührungspositionsdaten durch wiederholte vorbestimmte Lernoperationen nur dann auf den neuesten Stand gebracht werden, wenn die Temperaturdaten sich in dem vorbestimmten Bereich befinden, und

wobei die Kupplungsdaten durch Verwendung der auf den neuesten Stand gebrachten Berührungspositionsdaten korrigiert werden, die bei dem Erneuerungsschritt erhalten wurden.

**2.** Verfahren nach Anspruch 1, bei dem der Abtastschritt einen ersten Schritt zur Unterscheidung bzw. Diskriminierung, ob die Kupplung im halb-eingekuppelten Zustand betrieben wird oder nicht, einen zweiten Schritt, der auf ein Ergebnis der Unterscheidung in dem ersten Schritt zur Inkrementierung der Temperaturdaten um einen vorbestimmten Betrag zu vorgeschriebenen Zeitintervallen, wenn die Kupplung in ihrem halb-eingekuppelten Betriebszustand betrieben wird, ansprechend ist und einen dritten Schritt aufweist, der auf das Ergebnis der Unterscheidung in dem ersten Schritt zur Dekrementierung der Temperaturdaten um einen vorgeschriebenen Betrag bei vorgeschriebenen Zeitintervallen, wenn die Kupplung nicht in ihrem halb eingekuppelten Betriebszustand betrieben wird, ansprechend ist.

**3.** Verfahren nach Anspruch 2, bei dem der Betrag, um welchen die Temperaturdaten pro Zeiteinheit inkrementiert werden, so gesetzt wird, daß dieser größer ist als der Betrag, um den die Temperaturdaten pro Zeiteinheit dekrementiert werden.

4. Verfahren nach Anspruch 2, bei dem der zweite Schritt nur dann ausgeführt wird, wenn die Temperaturdaten kleiner sind als ein vorbestimmter maximaler Wert.

5. Verfahren nach Anspruch 2, bei dem der dritte Schritt nur dann ausgeführt wird, wenn die Temperaturdaten größer sind als ein vorbestimmter minimaler Wert.

6. Verfahren nach Anspruch 2, bei dem der vorgeschriebene Betrag bei dem ersten Schritt abhängig von dem Ausmaß der Betätigung der Kupplung und einer Eingangsdrehzahl der Kupplung bestimmt wird.

7. Verfahren nach Anspruch 1, bei dem bei dem Berechnungsschritt ein Koeffizientenwert auf der Grundlage von Daten berechnet wird, die eine geschätzte Temperatur der Reibungstypkupplung (3) angeben und

bei dem neue Berührungspositionsdaten auf der Grundlage von laufend auf den neuesten Stand gebrachten Berührungspositionsdaten bestimmt werden, die durch den Erneuerungsschritt und den genannten Koeffizientenwert erhalten werden, welcher in dem Berechnungsschritt berechnet worden ist.

8. Verfahren nach Anspruch 1, bei dem die Temperaturdaten dadurch erhalten werden, daß die Temperatur der Reibungskupplung (3) mit Hilfe einer Temperaturdetektoreinrichtung, die der Reibungskupplung (3) zugeordnet ist, direkt detektiert wird.

## Revendications

1. Procédé pour corriger des données d'embrayage comprenant des données de position représentant un état de fonctionnement d'un embrayage (3) relié à un moteur à explosion, ledit procédé comprenant les étapes consistant à:

détecter la température de l'embrayage (3) pour obtenir des données de température correspondantes,

distinguer si la température détectée est ou n'est pas supérieure à une valeur prédéterminée,

effectuer d'une manière répétée des opérations d'apprentissage pour obtenir des données de référence destinées à servir à la correction des données d'embrayage, et

corriger les données d'embrayage uniquement en fonction des données de référence, si la température détectée est supérieure à ladite valeur de température prédéterminée,

**caractérisé** en ce que

ledit embrayage (3) est un embrayage du type à friction,

lesdites données de position sont obtenues en tant que données de position de rencontre représentant un état de fonctionnement de l'embrayage (3) du type à friction correspondant à un passage de son état désaccouplé à son état semi-accouplé,

du fait de ladite étape de distinction, il est distingué si les données de température sont ou ne sont pas dans une plage prescrite, et lesdites données de température sont obtenues par calcul à partir de données prédéterminées indiquant un rythme d'augmentation de température d'embrayage pendant le fonctionnement de l'embrayage avec un semi-accouplement et un rythme de diminution de température d'embrayage pendant le fonctionnement de l'embrayage dans un état autre que le semi-accouplement,

lesdites données de position de rencontre ne sont mises à jour par lesdites opérations répétées d'apprentissage prédéterminé que lorsque les données de température sont sans ladite plage prescrite, et

les données d'embrayage sont corrigées à l'aide de données de position de rencontre mises à jour, obtenues lors de ladite étape de mise à jour.

2. Procédé selon la revendication 1, dans lequel ladite étape de détection comporte une première étape pour distinguer si l'embrayage fonctionne ou ne fonctionne pas dans l'état semi-accouplé, une deuxième étape en réponse à un résultat de la distinction lors de ladite première étape pour incrémenter d'une valeur prescrite les données de température selon une périodicité prescrite lorsque l'embrayage fonctionne dans son état de fonctionnement semi-accouplé, et une troisième étape en réponse au résultat de la distinction lors de la première étape pour décrémenter d'une valeur prescrite les données de température selon une périodicité prescrite lorsque l'embrayage ne fonctionne pas dans son état de fonctionnement semi-accouplé.

3. Procédé selon la revendication 2, dans lequel la valeur dont sont incrémentées les données de température par unité de temps est établie pour être supérieure à la valeur dont sont incrémentées les données de température par unité de temps.

4. Procédé selon la revendication 2, dans lequel ladite deuxième étape est exécutée seulement lorsque les données de température sont inférieures à une valeur maximale prédéterminée.

**5.** Procédé selon la revendication 2, dans lequel ladite troisième étape est exécutée seulement lorsque les données de température sont supérieures à une valeur minimale prédéterminée.

**6.** Procédé selon la revendication 2, dans lequel la valeur prescrite de ladite première étape est déterminée en fonction d'une valeur de fonctionnement de l'embrayage et de la vitesse primaire de rotation de l'embrayage.

**7.** Procédé selon la revendication 1, dans lequel, avec ladite étape de calcul, une valeur de coefficient est calculée à partir de données indiquant une température estimée de l'embrayage (3) du type à friction et

de nouvelles données de position de rencontre sont déterminées d'après des données instantanées mises à jour de position de rencontre obtenues grâce à ladite étape de mise à jour, et ladite valeur de coefficient calculée lors de ladite étape de calcul.

**8.** Procédé selon la revendication 1, dans lequel les données de température sont obtenues en détectant directement la température de l'embrayage (3) du type à friction, grâce à un moyen de détection de température associé à l'embrayage (3) du type à friction.

FIG.1

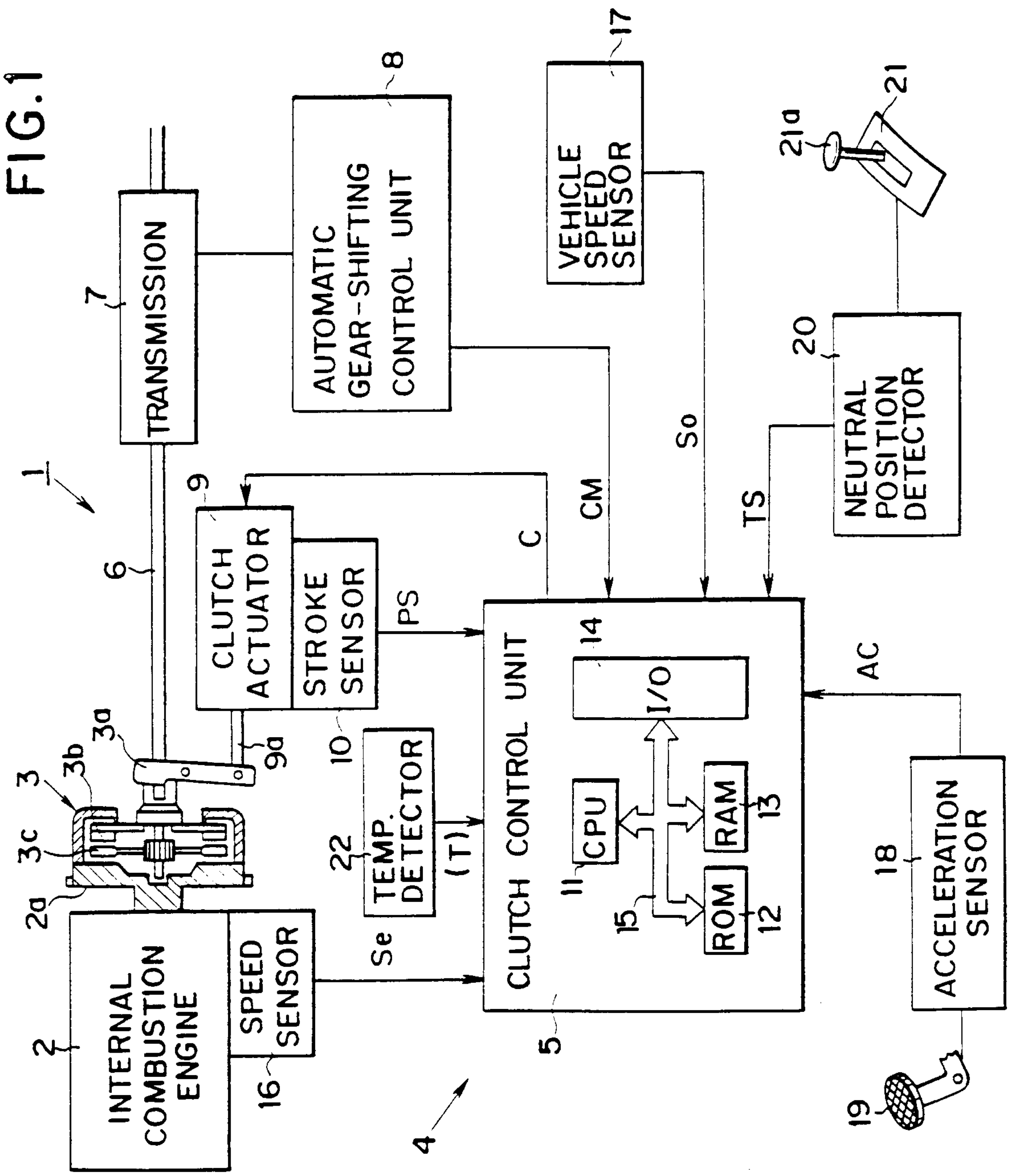
INTERNAL COMBUSTION ENGINE
SPEED SENSOR
TRANSMISSION
AUTOMATIC GEAR-SHIFTING CONTROL UNIT
CLUTCH ACTUATOR
STROKE SENSOR
TEMP. DETECTOR
CLUTCH CONTROL UNIT
CPU
ROM
RAM
I/O
VEHICLE SPEED SENSOR
NEUTRAL POSITION DETECTOR
ACCELERATION SENSOR
Se
PS
(T)
C
CM
So
TS
AC
1
2
2a
3
3a
3b
3c
4
5
6
7
8
9
9a
10
11
12
13
14
15
16
17
18
19
20
21
21a
22

FIG.2

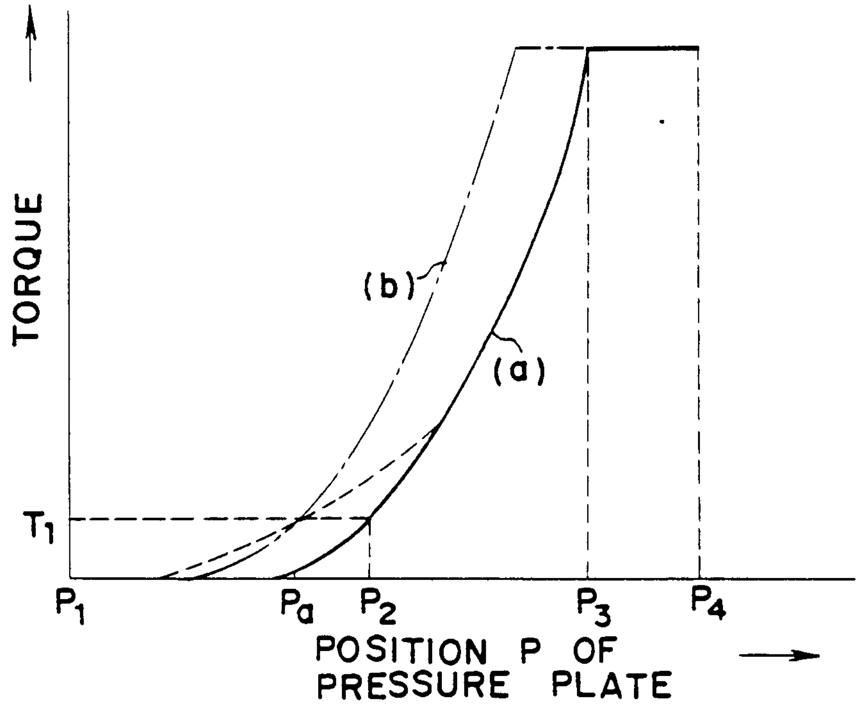
TORQUE
(b)
(a)
$T_1$
$P_1$
$P_a$
$P_2$
$P_3$
$P_4$
POSITION P OF PRESSURE PLATE

FIG.3

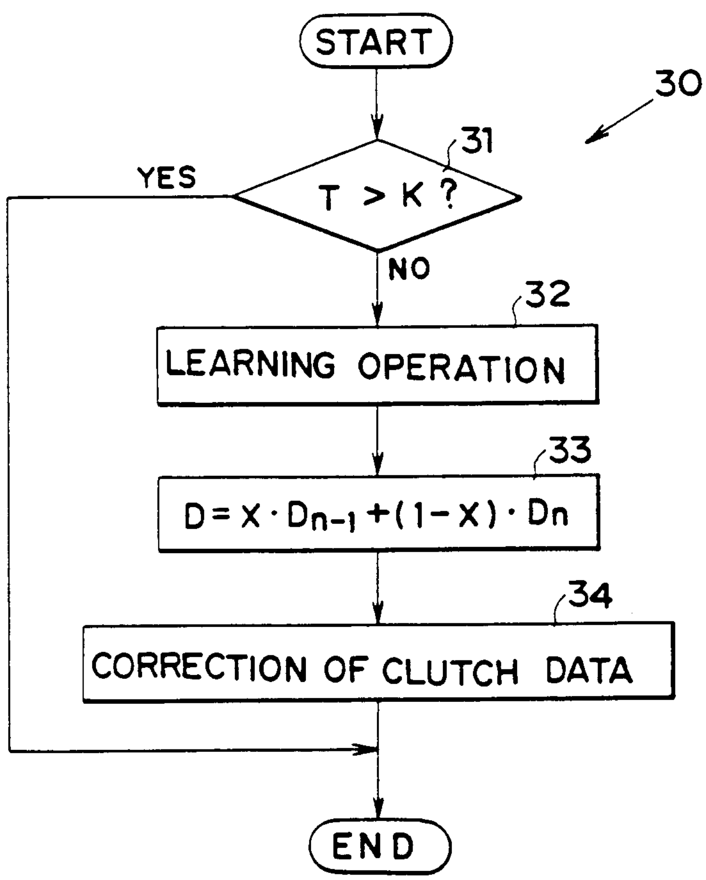
START
30
31
T > K ?
YES
NO
32
LEARNING OPERATION
33
$D = X \cdot D_{n-1} + (1-X) \cdot D_n$
34
CORRECTION OF CLUTCH DATA
END

FIG.4

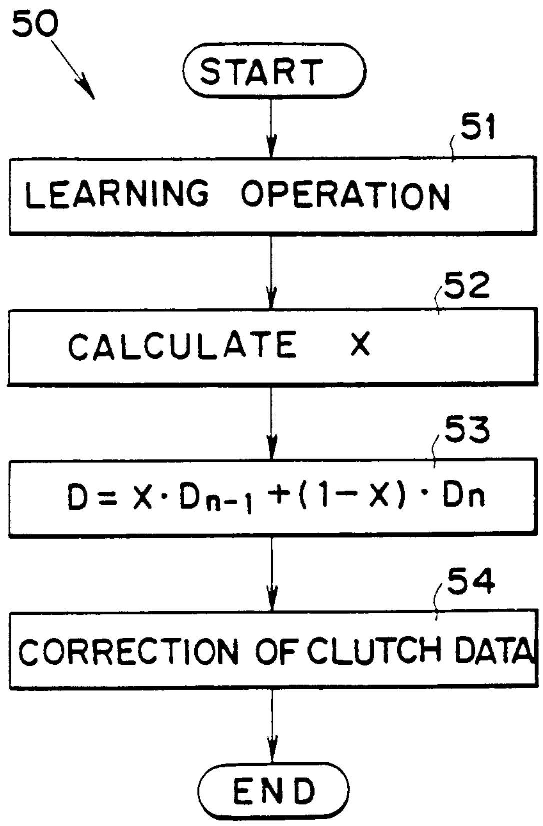
50
START
51
LEARNING OPERATION
52
CALCULATE X
53
D = X · Dn-1 + (1 − X) · Dn
54
CORRECTION OF CLUTCH DATA
END

FIG.5

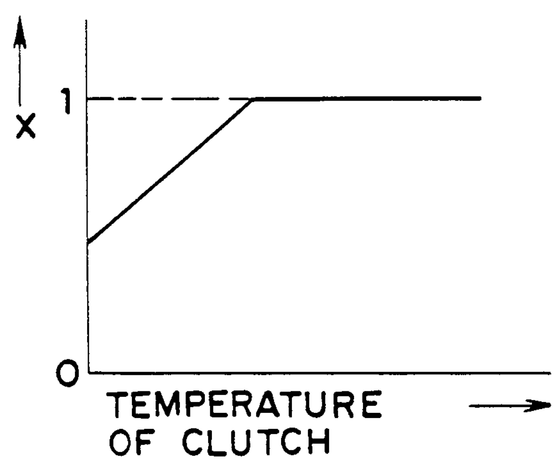
X
1
0
TEMPERATURE OF CLUTCH

FIG. 6

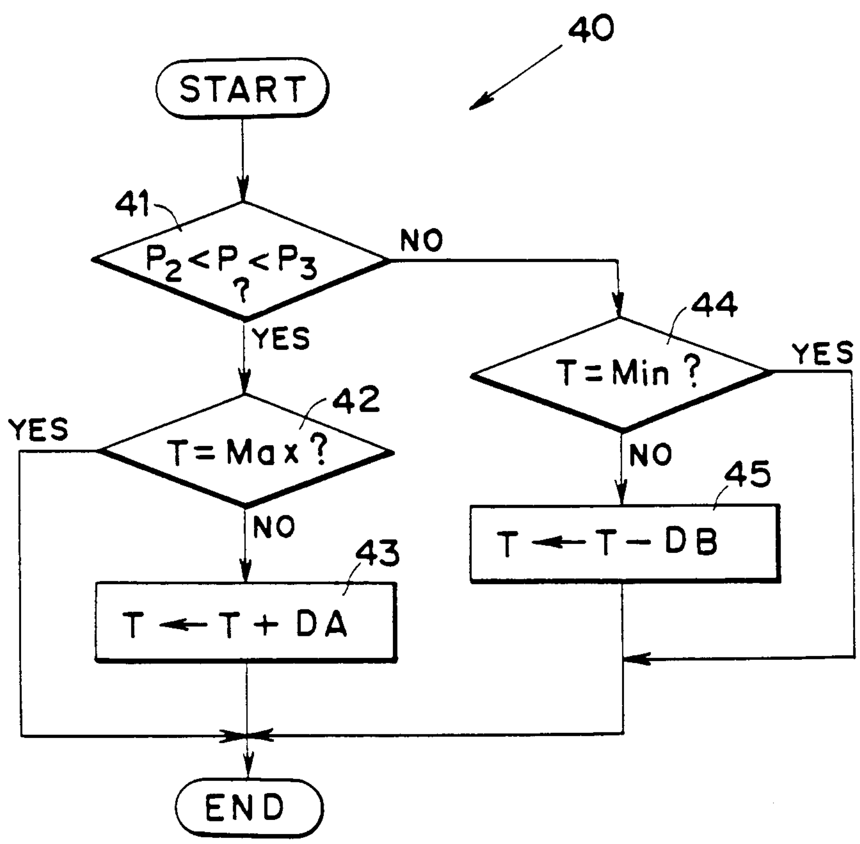
40
START
41
P2<P<P3 ?
NO
YES
44
T=Min ?
YES
42
YES
T=Max ?
NO
NO
45
T ← T − DB
43
T ← T + DA
END

FIG.7A

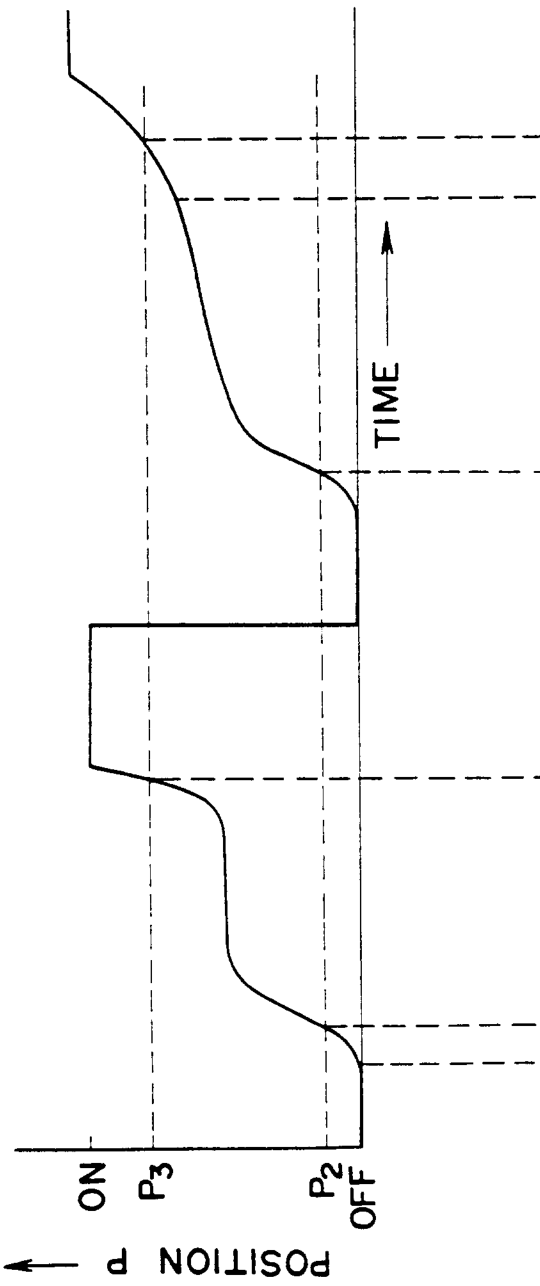
POSITION P
ON
$P_3$
$P_2$
OFF
TIME

FIG.7B

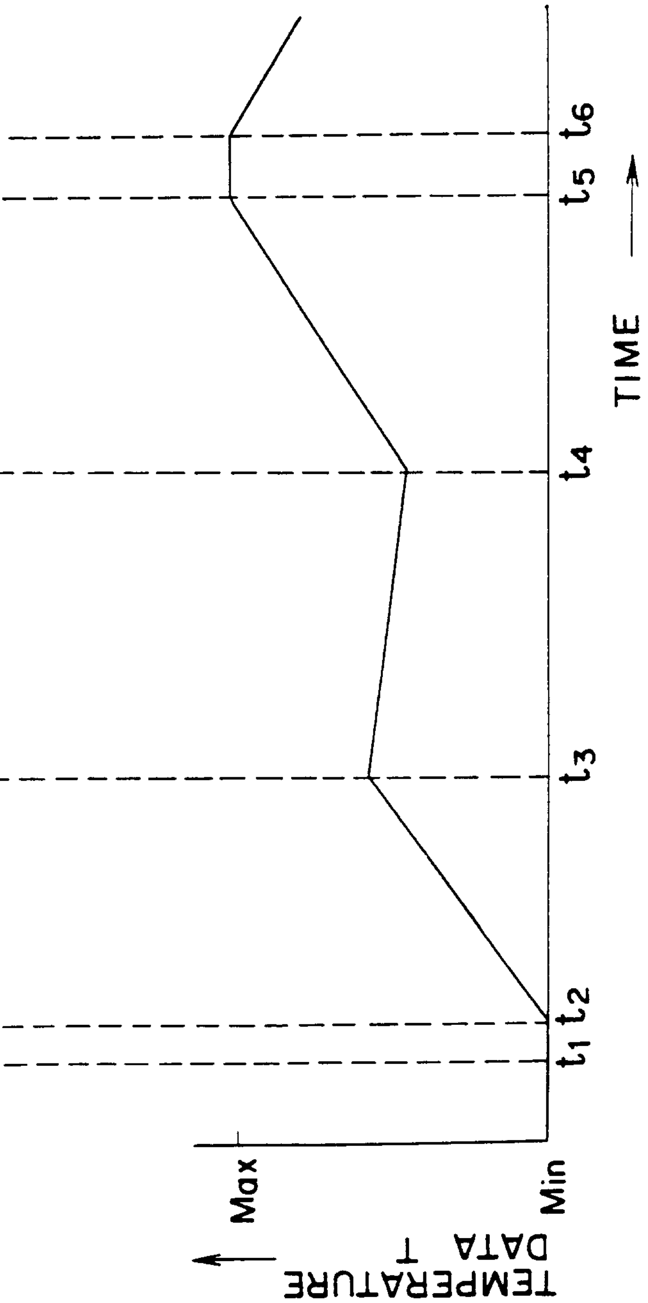
TEMPERATURE DATA T
Max
Min
$t_1$ $t_2$
$t_3$
$t_4$
$t_5$ $t_6$
TIME

FIG. 8

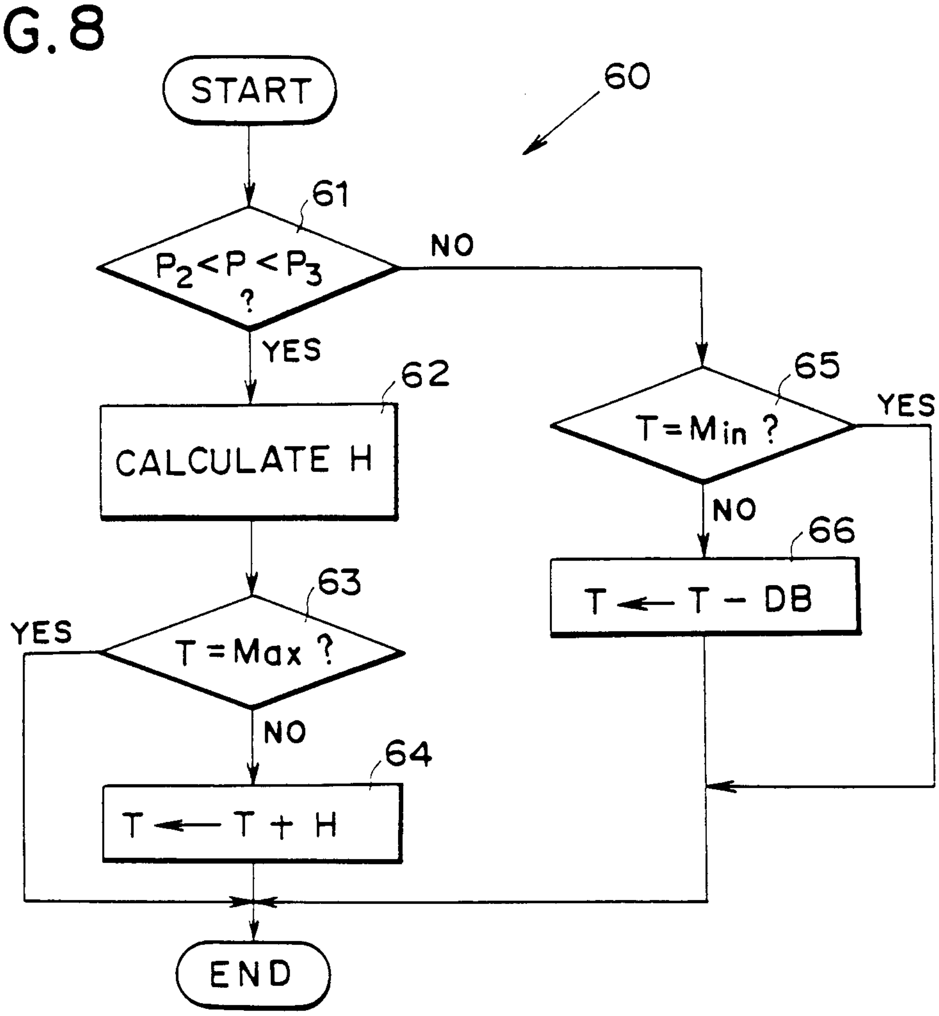
START
60
61
$P_2 < P < P_3$ ?
NO
YES
62
CALCULATE H
65
T = Min ?
YES
NO
66
T ← T − DB
63
YES
T = Max ?
NO
64
T ← T + H
END

FIG. 9

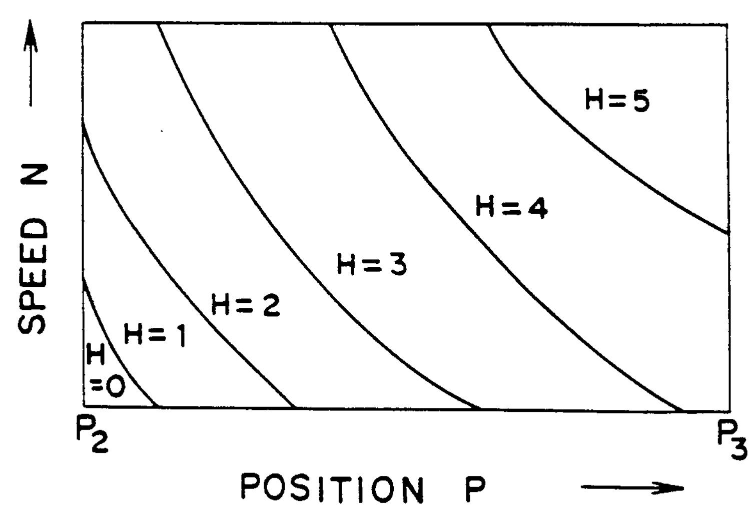
SPEED N
H=5
H=4
H=3
H=2
H=1
H =0
$P_2$
$P_3$
POSITION P